# DEMANDE DE BREVET EUROPEEN

(11) **EP 2 404 727 A1**
(43) Date de publication de la demande: **11.01.2012**
(21) Numéro de dépôt: 10168805.9
(22) Date de dépôt: 08.07.2010
(51) Int. Cl.: B29C 33/30, B29C 33/00, B29C 45/26, B29C 43/36

(54) **Moule comportant au moins une coque moulante pour le moulage par injection, compression ou techniques similaires, coque moulante equipant le moule, et procede de fabrication du moule**

(71) Demandeur: ARRK Tooling Sermo France, 49280 La Seguiniere (FR)
(72) Inventeur: Rayer, Michaël, 49280 La Seguiniere (FR); Boutin, Robert, 49280 La Seguiniere (FR); Tronel, Michel, 49280 La Seguiniere (FR)
(74) Mandataire: Chaillot, Geneviève

(57) **Abrégé**

Ce moule (101) de compression, d'injection ou pour une technique de moulage similaire, comprend une matrice dont une face présente une forme moulante et dont l'autre face présente des moyens de fixation à un plateau de presse, un noyau dont une face présente la forme moulante complémentaire de la forme moulante présentée par la matrice et dont l'autre face porte des moyens de fixation à un plateau de presse opposé, et un dispositif d'éjection de la pièce moulée (111) constitué par une plaque d'éjection (112) et au moins un éjecteur (114) traversant le noyau. Il est caractérisé par le fait qu'au moins l'un parmi la matrice et le noyau est constitué par une coque (109, 122) présentant la forme moulante associée et définissant, sur sa face (109b, 122b) opposée à la face (109a, 122a) présentant la forme moulante, une cavité apte à être fermée par une plaque (105, 119) qui porte au moins un tasseau (107, 120) dont l'extrémité vient en appui contre la coque (109, 122) et qui est agencé pour absorber les efforts de compression créés lors du moulage, le ou les éjecteurs (113) traversant à la fois la plaque de noyau (105) et la coque de noyau (109).

## Description

La présente invention porte sur des moules pour le moulage par injection, compression ou par des techniques similaires, de pièces en matière thermoplastique ou en matière plastique composite, en particulier en matière thermodurcie, ces pièces étant aussi bien des pièces de structure que des pièces de forme.

Par l'expression « techniques similaires », on entend notamment le moulage par transfert de résine et le moulage par injection-compression.

Les pièces moulées que l'on peut fabriquer avec les moules selon la présente invention sont très variées, appartenant à des secteurs industriels tels que l'industrie automobile, le secteur ferroviaire, la construction aéronautique et l'aérospatiale, la construction navale, l'industrie électrique, le domaine sanitaire, le mobilier, le bâtiment, les loisirs et les sports.

On peut citer, entre autres, dans le domaine automobile : les panneaux de portières, panneaux latéraux, panneaux de carrosserie, ailes, toits amovibles, hayons, panneaux de toiture, capots, rétroviseurs latéraux, assises et supports de sièges, contre-portes de voiture, dossiers de sièges, tablettes arrière, pare-chocs, amortisseurs, jantes ; dans le domaine du bâtiment : panneaux de protection et d'isolation, bardeaux, plaques translucides planes ou ondulées, les éléments de salles de bain, tels que baignoires, lavabos, douches, éviers.

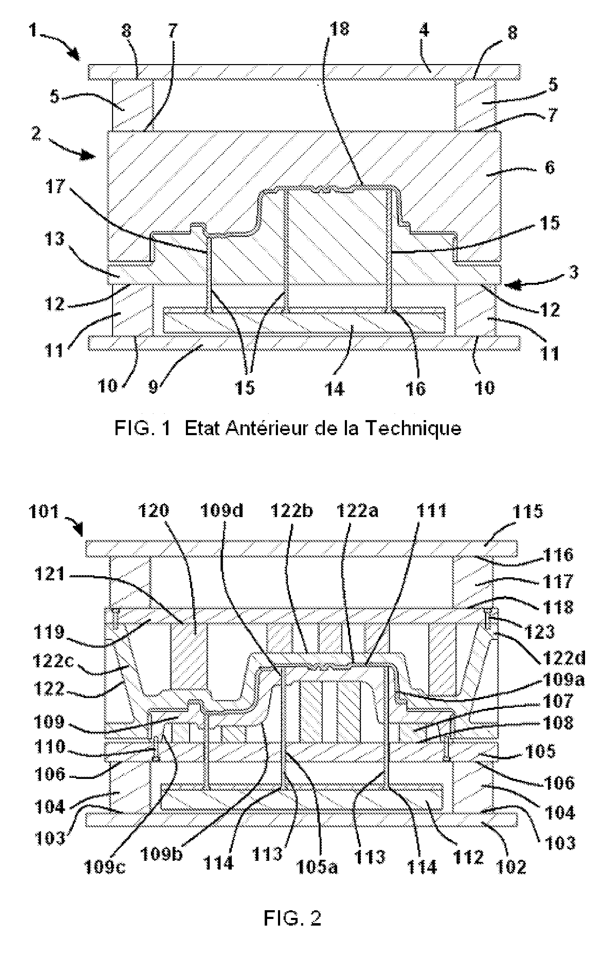

Les moules d'injection, de compression ou de technique similaire destinés à la fabrication de ces pièces qui sont conçus en technologie traditionnelle sont des moules métalliques réalisés à partir de blocs en acier coulé massif. On va maintenant décrire plus en détail, avec référence à la Figure 1, un moule traditionnel réalisé à partir de blocs d'acier et décrire les inconvénients d'un tel moule.

Le moule 1, représenté en position fermée sur la Figure 1, comporte un ensemble matrice 2 présentant une forme moulante et un ensemble noyau 3 présentant la forme moulante complémentaire de la forme moulante présentée par l'ensemble matrice 2. On va maintenant décrire les ensembles 2 et 3 en faisant référence à leur position représentée sur la Figure 1, à savoir pour un assemblage et un déplacement du moule selon un axe vertical.

L'ensemble matrice 2 comprend, de haut en bas si l'on regarde la Figure 1 : une semelle 4, des tasseaux 5 et une matrice 6. La matrice 6 est un monobloc d'acier usiné ayant la forme générale d'un parallélépipède rectangle, usiné en creux sur sa grande face inférieure pour constituer une forme moulante correspondant à la partie bombée de la pièce à mouler - une pièce pour coffre arrière avec logement pour roue de secours dans l'exemple représenté. La matrice 6 est assemblée en 7 aux tasseaux 5, au nombre de quatre, eux-mêmes assemblés en 8 à la semelle 4.

La semelle 4 présente des moyens (non représentés) permettant de la fixer, par exemple par vissage, à un plateau de presse, qui est le plateau mobile dans le cas d'un moule à déplacement vertical comme représenté sur la Figure 1, mais qui serait le plateau fixe de la presse dans le cas d'un moule à déplacement horizontal. Ces moyens de fixation ne seront pas décrits plus en détail car ils sont bien connus des moulistes.

L'ensemble noyau 3 comprend, de bas en haut si l'on regarde la Figure 1 : une semelle 9 assemblée en 10 à des tasseaux 11, eux-mêmes assemblés en 12 à un noyau 13.

La semelle 9 a la forme générale d'une plaque rectangulaire. Elle présente des moyens de fixation, par exemple par vissage, au plateau de presse fixe dans le cas d'un moule à déplacement vertical, ou au plateau de presse mobile dans le cas d'un moule à déplacement horizontal.

Les tasseaux 11, au nombre de quatre, sont assemblés aux quatre coins de façon à délimiter, entre la face inférieure du noyau 13 et la face supérieure de la semelle 9, un espace vide ou cage d'éjection, constituant un passage mécanique dans lequel se déplace une plaque d'éjection 14, entre une position où elle vient en appui sur la face supérieure de la semelle 9 et une position d'éjection comme cela sera décrit ci-après.

La plaque d'éjection 14 porte des éjecteurs 15 assemblés à celle-ci en 16.

Le noyau 13 est également constitué par un bloc en acier massif dont la face inférieure est destinée à être assemblée aux faces supérieures des tasseaux 11 et dont la face supérieure est configurée pour porter la forme moulante complémentaire de la forme moulante présentée par la matrice 6. Les éjecteurs 15, disposés verticalement dans l'exemple représenté, traversent le noyau 13 à travers des ouvertures 17 prévues pour le passage libre des éjecteurs 15.

A l'ouverture du moule 1, la plaque d'éjection 14 est actionnée pour se soulever et permettre l'éjection de la pièce moulée 18 de façon connue en soi.

Les moules en acier tels que celui qui vient d'être décrit présentent un poids très important, un gros moule de pare-chocs réalisé avec ces technologies traditionnelles présentant un poids de l'ordre de 30 tonnes. Ils sont réalisés à partir de blocs d'acier de très grandes dimensions, lesquels doivent être soumis à des phases d'usinage - usinage grossier puis usinage de finition - pour former sur l'une des faces la forme moulante, ces phases d'usinage enlevant de la matière qui est définitivement perdue.

En particulier, le bloc d'acier constituant le noyau doit également être soumis à des phases d'usinage afin d'intégrer la fonction d'éjection de la pièce moulée, assurée par les éjecteurs 15 portés par la plaque d'éjection 14, cette intégration consistant en la réalisation des ouvertures 17.

Ces phases d'usinage sont coûteuses en termes de main-d'oeuvre et d'outil, augmentant de ce fait le coût de fabrication du moule.

Le poids important des blocs constituant le moule, nécessaire pour en garantir les caractéristiques mécaniques, rend leur manipulation difficile et leur transport malaisé et coûteux.

En outre, l'acier étant acheté au poids, la fabrication du moule est d'autant plus coûteuse que le poids des blocs constituant le moule est important.

De plus, dans l'opération de moulage, les masses en mouvement sont importantes, avec, pour conséquence des efforts importants appliqués à la presse, réduisant par là la durée de vie de cette dernière.

La Société déposante a recherché une solution à ces différents problèmes provenant du poids et des dimensions importantes des blocs composant les moules et a découvert qu'il était possible de les résoudre en remplaçant les blocs d'acier utilisés depuis toujours pour former les matrices et/ou les noyaux par un ensemble comprenant une coque, une plaque et au moins un tasseau.

Il n'était pas évident d'introduire une telle technologie dans ce domaine des moules d'injection et de compression pour lesquels des efforts extrêmement importants doivent être absorbés appelant donc naturellement l'emploi de blocs massifs d'acier.

Un tel ensemble coque - plaque - tasseaux venant remplacer les blocs massifs, la diminution de la quantité de matière utilisée réduit d'autant l'énergie utilisée pour l'élaboration de ces matériaux et le coût de fabrication du moule.

La réduction du poids final du moule a un fort impact favorable sur le transport, le facilitant et en diminuant le coût. De plus, les pièces individuelles étant moins encombrantes, les volumes à transporter sont moindres. Il a ainsi pu être observé que cette technologie permet d'abaisser entre 20 et 30 % le poids d'un moule traditionnel.

Le poids du moule étant abaissé, les masses du moule en mouvement lors du moulage sont réduites, ce qui permet de moins solliciter la presse et donc d'allonger sa durée de vie.

Des avantages complémentaires de l'invention sont que la fabrication des moules selon l'invention demande moins de temps que l'usinage de blocs massifs et que les modifications et évolutions des moules, par exemple si une pièce à mouler doit subir des modifications ou évolutions de forme, sont facilitées. L'utilisation d'une coque est alors un avantage important, car il n'est alors plus nécessaire de manipuler de gros blocs d'acier. Ainsi, lorsqu'il est nécessaire de modifier la coque pour lui ajouter un creux moulant, il suffit de réaliser ce creux sur la face de la coque présentant la forme moulante et de rapporter une pièce de même matériau que la coque à l'opposé de ce creux, de façon à conserver la résistance mécanique de la coque.

Ainsi, alors que, dans l'état antérieur de la technique, on part de gros blocs d'acier obtenus par coulée que l'on usine ensuite, la fabrication du moule selon l'invention est plus facile à effectuer car elle consiste en l'usinage de coques de moindre encombrement chacune, plus faciles à manipuler. En particulier, les blocs d'acier doivent être commandés auprès d'usines souvent éloignées de l'endroit où sont fabriqués les moules.

L'autre avantage complémentaire, non négligeable, est qu'en cas de modifications importantes de la pièce à mouler, seule la coque doit être changée, ce qui présente un coût beaucoup plus faible que dans le cas des moules traditionnels qui ne peuvent pas être réutilisés et pour lesquels la construction d'un nouveau moule est nécessaire.

La présente invention a donc pour objet un moule de compression, d'injection ou pour une technique de moulage similaire, comprenant une matrice dont une face présente une forme moulante et dont l'autre face porte des moyens de fixation à un plateau de presse, un noyau dont une face présente la forme moulante complémentaire de la forme moulante présentée par la matrice et dont l'autre face porte des moyens de fixation à un plateau de presse opposé, et un dispositif d'éjection de la pièce moulée constitué par une plaque d'éjection et au moins un éjecteur traversant le noyau, caractérisé par le fait qu'au moins l'un parmi la matrice et le noyau est constitué par une coque présentant la forme moulante associée et définissant, sur sa face opposée à la face présentant la forme moulante, une cavité apte à être fermée par une plaque qui porte au moins un tasseau dont l'extrémité vient en appui contre la coque et qui est agencé pour absorber les efforts de compression créés lors du moulage, le ou les éjecteurs traversant à la fois la plaque de noyau et la coque de noyau.

La ou chaque coque est avantageusement réalisée en un matériau de résistance suffisante pour satisfaire aux exigences de moulage de la pièce à mouler. En particulier, la coque peut ainsi être en acier ou fonte.

Conformément à un mode particulier de l'invention, les faces des coques présentant les formes moulantes sont de forme complémentaire, assurant la fermeture étanche de l'empreinte formée par les deux formes moulantes, et les coques portent, à leur périphérie, des jupes pour former chacune la cavité recevant les tasseaux.

La coque peut être obtenue par fonderie, usinage, projection métallique, stéréolithographie ou frittage.

Les tasseaux peuvent être réalisés en acier.

Conformément à un mode de réalisation particulier de l'invention, le moule tel que défini ci-dessus est destiné à un moulage par injection et comprend en outre un dispositif d'injection de matière de moulage dans l'empreinte, passant à travers un orifice pratiqué dans la plaque de matrice et un orifice pratiqué dans la coque de matrice.

La présente invention a également pour objet une coque de matrice ou de noyau destinée à équiper un moule tel que défini ci-dessus, caractérisée par le fait que l'une de ses faces présente une forme moulante et définit, sur sa face opposée à la face présentant la forme moulante, une cavité apte à être fermée par une plaque qui porte au moins un tasseau dont l'extrémité vient en appui contre la coque et est agencé pour absorber les efforts de compression créés lors du moulage, la coque présentant également au moins un orifice permettant le passage d'un éjecteur.

La présente invention a également pour objet un procédé de fabrication d'un moule tel que défini ci-dessus, caractérisé par le fait que l'on définit les formes moulantes de matrice et de noyau, que l'on réalise au moins une coque présentant la forme moulante associée et définissant, sur sa face opposée à la face présentant la forme moulante, une cavité apte à être fermée par une plaque qui porte au moins un tasseau dont l'extrémité vient en appui contre la coque et qui est agencé pour absorber les efforts de compression créés lors du moulage, et que l'on assemble la ou chaque coque à une plaque portant au moins un tasseau venant en appui contre la coque, de façon à fermer ladite cavité.

Pour mieux illustrer l'objet de la présente invention, on va en décrire ci-après un mode de réalisation particulier avec référence au dessin annexé.

Sur ce dessin,
- la Figure 1 est une vue schématique d'un moule d'injection, de compression ou similaire fabriqué par usinage de blocs d'acier conformément à l'état antérieur de la technique, le moule étant représenté dans sa position fermée ;
- la Figure 2 est une vue analogue à la Figure 1 d'un moule comportant une matrice et un noyau réalisés conformément à la présente invention, le moule étant représenté dans sa position fermée ;
- la Figure 3 est une vue en perspective de la coque de noyau du moule représenté sur la Figure 2, la coque étant vue de dessus de façon à représenter la forme moulante de la coque de noyau ; et
- la Figure 4 est une vue en perspective de la coque de noyau du moule représenté sur la Figure 2, la coque étant vue de dessous de façon à représenter la face opposée à la face présentant la forme moulante de la coque de noyau.

Si l'on se réfère aux Figures 2 à 4, on peut voir que le moule 101 de compression, d'injection ou pour une technique similaire, selon la présente invention, comprend à sa base, de façon analogue aux moules traditionnels décrits ci-dessus, une semelle 102 sur laquelle sont assemblés en 103 des tasseaux 104.

La semelle 102 a la forme générale d'une plaque rectangulaire. Les tasseaux 104 sont disposés à chaque coin de la semelle 102 et ont la même hauteur.

Les tasseaux 104 supportent sur leur face supérieure une plaque 105, dont la face inférieure est assemblée en 106 aux tasseaux 104. Cette plaque 105 est de forme généralement rectangulaire et supporte sur sa face supérieure des tasseaux 107, leur extrémité inférieure étant assemblée en 108 à la face supérieure de la plaque 105.

Une coque 109 est rendue solidaire de la plaque 105 par des vis 110 et sert de noyau proprement dit du moule 101. Elle présente ainsi sur sa face supérieure 109a une forme moulante adaptée à la pièce à mouler 111. La face inférieure 109b de la coque de noyau 109 a sensiblement la même forme que la face supérieure 109a, de telle sorte que l'épaisseur de la coque est globalement constante.

La forme de la coque de noyau 109 est telle que la face inférieure 109b forme une cavité fermée par la plaque 105, cette cavité recevant les tasseaux 107. Ainsi, la coque de noyau 109 présente une petite jupe 109c délimitant la périphérie de la cavité. La coque de noyau 109 est fixée à la plaque 105 par l'intermédiaire de cette petite jupe 109c.

Les tasseaux 107 ont une longueur telle que leur extrémité supérieure vient supporter la face inférieure 109b de la coque de noyau 109, sans être fixés par de quelconques moyens de fixation. La face inférieure 122b peut bien entendu présenter des moyens permettant aux tasseaux 107 de venir en appui contre celle-ci.

Après que la coque de noyau 109 a été fixée par vissage à la plaque 105, l'ensemble formé par la plaque 105, les tasseaux 107 et la coque de noyau 109 se comporte comme un ensemble rigide monobloc.

On voit donc que le noyau 13 des moules traditionnels décrits ci-dessus a été remplacé par la plaque 105, les tasseaux 107 et la coque de noyau 109. La résistance mécanique aux efforts créés lors du moulage, auparavant fournie par le bloc d'acier constituant le noyau, est maintenant assurée par les tasseaux 107 supportant la coque de noyau 109 dont le matériau a une résistance suffisante pour satisfaire aux exigences de moulage de la pièce à mouler 111.

Afin d'intégrer la fonction d'éjection de la pièce moulée 111, une plaque d'éjection 112 est placée dans l'espace vide ou cage d'éjection formé entre la face supérieure de la semelle 102 et la face inférieure de la plaque 105. Cet espace vide constitue un passage mécanique dans lequel se déplace la plaque d'éjection 112, entre une position où elle vient en appui sur la face supérieure de la semelle 102 et une position d'éjection de la pièce moulée 111.

La plaque d'éjection 112 porte des éjecteurs 113 assemblés à celle-ci en 114. Des orifices traversants 105a sont pratiqués dans la plaque 105 pour le passage libre des éjecteurs 113.

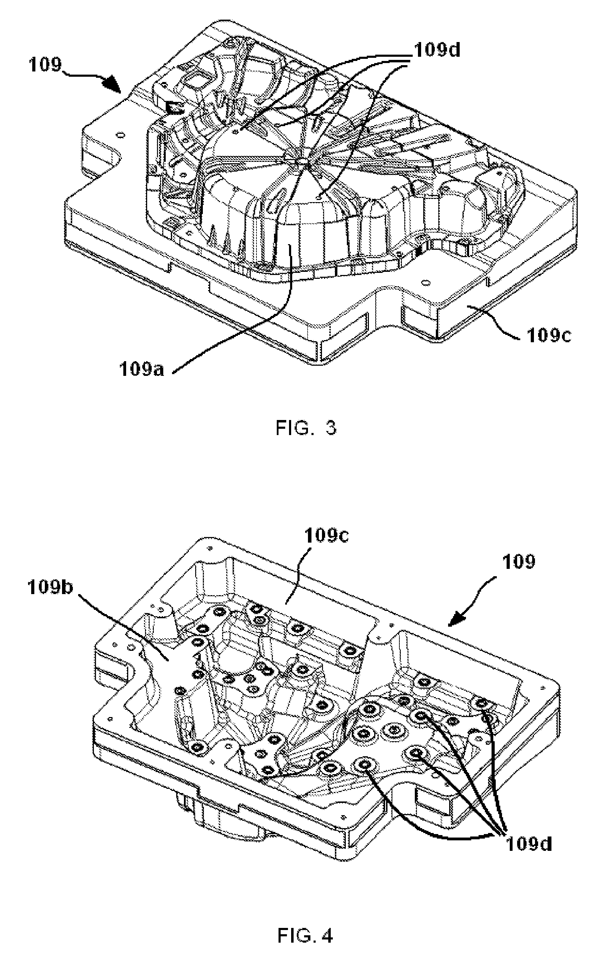

On peut mieux voir sur les Figures 3 et 4, qui représentent en perspective la coque de noyau 109 respectivement vue de dessus et vue de dessous, que des orifices traversants 109d sont également pratiqués dans la coque 109 afin de permettre le passage libre des éjecteurs 113.

A l'ouverture du moule 101, la plaque d'éjection 112 est actionnée pour se soulever et permettre l'éjection de la pièce moulée 111 de façon connue en soi.

Si l'on se réfère encore à la Figure 2, on peut voir qu'à sa partie supérieure, le moule 101 comprend, comme le moule traditionnel décrit ci-dessus, une semelle 115 de forme généralement rectangulaire et présentant des moyens de fixation (non représentés) à un plateau de presse.

La face inférieure de la semelle 115 est assemblée en 116 à la face supérieure de tasseaux 117. Les tasseaux 117 sont disposés aux quatre coins de la semelle 115 et ont la même hauteur.

La face inférieure des tasseaux 117 est assemblée en 118 à la face supérieure d'une plaque 119 généralement rectangulaire.

De façon analogue au noyau du moule 101 selon la présente invention, les faces supérieures de tasseaux 120 sont assemblées en 121 à la face inférieure de la plaque 119.

Une coque 122 est rendue solidaire de la plaque 119 par des vis 123.

La coque 122 sert de matrice proprement dite du moule 101. Elle présente ainsi sur sa face inférieure 122a la forme moulante complémentaire de la forme moulante présentée par la face supérieure 109a de la coque de noyau 109. La face supérieure 122b de la coque de matrice 122 a sensiblement la même forme que la face inférieure 122a, de telle sorte que l'épaisseur de la coque est globalement constante.

La forme de la coque de matrice 122 est telle que la face supérieure 122a forme une cavité fermée par la plaque 119, cette cavité recevant les tasseaux 120. Ainsi, dans l'exemple représenté sur la Figure 2, la coque de matrice 122 présente une jupe 122c se terminant en une collerette périphérique 122d par l'intermédiaire de laquelle la coque de matrice 122 est reliée à la plaque 119 par les vis 123.

Les tasseaux 120 ont une longueur telle que leur extrémité inférieure vient en appui contre la face supérieure 122b de la coque de matrice 122, sans y être fixés par de quelconques moyens de fixation. La face supérieure 122b peut bien entendu présenter des moyens permettant aux tasseaux 120 de venir en appui contre celle-ci.

Après que la coque de matrice 122 a été fixée par vissage à la plaque 119, l'ensemble formé par la plaque 119, les tasseaux 120 et la coque de noyau 122 se comporte comme un ensemble rigide monobloc.

On voit donc que la matrice 6 des moules traditionnels décrits ci-dessus a été remplacé par la plaque 119, les tasseaux 120 et la coque de matrice 122. La résistance mécanique aux efforts créés lors du moulage, auparavant fournie par le bloc d'acier constituant la matrice, est maintenant assurée par les tasseaux 120 supportant la coque de matrice 122 dont le matériau a une résistance suffisante pour satisfaire aux exigences de moulage de la pièce à mouler 111.

Si le moule 101 représenté est destiné à un moulage par injection, des orifices traversants sont pratiqués dans la plaque 119 et des orifices traversants sont pratiqués dans la coque 122 afin de permettre le passage d'un dispositif d'injection de matière.

Lorsque le moule 101 est dans sa position fermée, les formes moulantes portées par la coque de noyau 109 et la coque de matrice 122 forment une empreinte dans laquelle est formée par la pièce à mouler 111. On peut voir que la forme de la face supérieure 109a de la coque de noyau 109 et que la forme de face inférieure 122a de la coque de matrice 122 sont complémentaires sur l'extérieur de l'empreinte de façon à fermer celle-ci de façon étanche, une partie de la face inférieure 122a venant s'adapter autour de la face externe de la jupe 109c.

Ainsi, lorsque l'on souhaite fabriquer une pièce en matière plastique à l'aide du moule 101, on injecte dans l'empreinte, une fois le moule 101 fermé, de la matière préplastifiée et dosée en conduisant généralement une injection sous une première pression, un dégazage, puis une fin d'injection sous une deuxième pression. Après un laps de temps, on ouvre le moule 101 et on éjecte la pièce moulée 111, puis on referme le moule, le cycle de moulage pouvant alors recommencer.

On voit donc que l'on a constitué un moule de compression, d'injection ou pour technique de moulage similaire, dans lequel les blocs d'acier formant la matrice et le noyau ont chacun été remplacés par un ensemble plaque - tasseaux - coque, permettant de diminuer fortement la quantité d'acier utilisé, et donc le coût de fabrication du moule.

Il est bien entendu que les modes de réalisation qui ont été décrits ci-dessus ont été donnés à titre indicatif et non limitatif et que des modifications peuvent être apportées sans que l'on s'écarte pour autant du cadre de la présente invention.

## Revendications

1. Moule (101) de compression, d'injection ou pour une technique de moulage similaire, comprenant une matrice dont une face présente une forme moulante et dont l'autre face présente des moyens de fixation à un plateau de presse, un noyau dont une face présente la forme moulante complémentaire de la forme moulante présentée par la matrice et dont l'autre face porte des moyens de fixation à un plateau de presse opposé, et un dispositif d'éjection de la pièce moulée (111) constitué par une plaque d'éjection (112) et au moins un éjecteur (114) traversant le noyau, **caractérisé par le fait qu'**au moins l'un parmi la matrice et le noyau est constitué par une coque (109, 122) présentant la forme moulante associée et définissant, sur sa face (109b, 122b) opposée à la face (109a, 122a) présentant la forme moulante, une cavité apte à être fermée par une plaque (105, 119) qui porte au moins un tasseau (107, 120) dont l'extrémité vient en appui contre la coque (109, 122) et qui est agencé pour absorber les efforts de compression créés lors du moulage, le ou les éjecteurs (113) traversant à la fois la plaque de noyau (105) et la coque de noyau (109).

2. Moule selon la revendication 1, **caractérisé par le fait que** la ou chaque coque (109, 122) est réalisée en un matériau de résistance suffisante pour satisfaire aux exigences de moulage de la pièce à mouler (111).

3. Moule selon la revendication 2, **caractérisé par le fait que** la coque (109, 122) est en acier ou fonte.

4. Moule selon l'une des revendications 1 à 3, **caractérisé par le fait que** les faces (109a, 122a) des coques présentant les formes moulantes sont de forme complémentaire, assurant la fermeture étanche de l'empreinte formée par les deux formes moulantes, et que les coques (109, 122) portent, à leur périphérie, des jupes (109c, 122c) pour former chacune la cavité recevant les tasseaux (107, 120).

5. Moule selon l'une des revendications 1 à 4, **caractérisée par le fait que** la coque (109, 122) est obtenue par fonderie, usinage, projection métallique, stéréolithographie ou frittage.

6. Moule selon l'une des revendications 1 à 5, **caractérisé par le fait que** les tasseaux (107, 120) sont réalisés en acier.

7. Moule selon l'une des revendications 1 à 6, destiné à un moulage par injection, **caractérisé par le fait qu'**il comprend en outre un dispositif d'injection de matière dans l'empreinte, passant à travers un orifice pratiqué dans la plaque de matrice (119) et un orifice pratiqué dans la coque de matrice (122).

8. Coque de matrice ou de noyau (109, 122) destinée à équiper un moule (101) tel que défini à l'une quelconque des revendications 1 à 7, **caractérisée par le fait que** l'une de ses faces (109a, 122a) présente une forme moulante et définit, sur sa face (109b, 122b) opposée à la face (109a, 122a) présentant la forme moulante, une cavité apte à être fermée par une plaque (105, 119) qui porte au moins un tasseau (107, 120) dont l'extrémité vient en appui contre la coque (109, 122) et est agencé pour absorber les efforts de compression créés lors du moulage, la coque (109, 122) présentant également au moins un orifice (109d) permettant le passage d'un éjecteur (113) ou d'un dispositif d'injection de matière.

9. Procédé de fabrication d'un moule (101) tel que défini à l'une quelconque des revendications 1 à 7, **caractérisé par le fait que** l'on définit les formes moulantes de matrice et de noyau, que l'on réalise au moins une coque (109, 122) présentant la forme moulante associée et définissant, sur sa face (109b, 122b) opposée à la face (109a, 122a) présentant la forme moulante, une cavité apte à être fermée par une plaque (105, 119) qui porte au moins un tasseau (107, 120) dont l'extrémité vient en appui contre la coque (109, 122) et qui est agencé pour absorber les efforts de compression créés lors du moulage, et que l'on assemble la ou chaque coque (109, 122) à une plaque (105, 119) portant au moins un tasseau (107, 120) venant en appui contre la coque (109, 122), de façon à fermer ladite cavité.

10. Procédé de fabrication selon la revendication 9, **caractérisé par le fait que** l'on obtient la coque (109, 122) par fonderie, usinage, projection métallique, stéréolithographie ou frittage.
